(19) Europäisches Patentamt / European Patent Office / Office européen des brevets

(11) **EP 4 558 933 B1**

(12) **EUROPEAN PATENT SPECIFICATION**

(45) Date of publication and mention
of the grant of the patent:
**08.04.2026 Bulletin 2026/15**

(21) Application number: **23748959.6**

(22) Date of filing: **20.07.2023**

(51) International Patent Classification (IPC):
**G06N 3/065** (2023.01)     **G06N 3/049** (2023.01)

(52) Cooperative Patent Classification (CPC):
**G06N 3/065; G06N 3/049**

(86) International application number:
**PCT/EP2023/070137**

(87) International publication number:
**WO 2024/017996 (25.01.2024 Gazette 2024/04)**

(54) **MATCHED FEEDBACK INTEGRATE-AND-FIRE NEURON CIRCUIT**

INTEGRIERTE RÜCKKOPPLUNGS- UND FEUER-NEURONENSCHALTUNG

CIRCUIT DE NEURONES INTEGRATE-AND-FIRE À RÉTROACTION APPARIÉE

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: **22.07.2022 EP 22186414**

(43) Date of publication of application:
**28.05.2025 Bulletin 2025/22**

(73) Proprietor: **Fraunhofer-Gesellschaft zur
Förderung
der angewandten Forschung e.V.
80686 München (DE)**

(72) Inventors:
• **HERZER, Elmar**
  **91058 Erlangen (DE)**
• **LEUGERING, Johannes**
  **91058 Erlangen (DE)**

(74) Representative: **Gagel, Roland
Patentanwalt Dr. Roland Gagel
Landsberger Strasse 480a
81241 München (DE)**

(56) References cited:
**EP-B1- 2 877 958**

• **RAFAEL SERRANO-GOTARREDONA ET AL: "A Neuromorphic Cortical-Layer Microchip for Spike-Based Event Processing Vision Systems", IEEE TRANSACTIONS ON CIRCUITS AND SYSTEMS PART I: REGULAR PAPERS, IEEE SERVICE CENTER, NEW YORK, NY, US, vol. 53, no. 12, 11 December 2006 (2006-12-11), pages 2548 - 2566, XP011151644, ISSN: 1057-7122, DOI: 10.1109/TCSI.2006.883843**
• **BODO RUECKAUER ET AL: "Conversion of Continuous-Valued Deep Networks to Efficient Event-Driven Networks for Image Classification", FRONTIERS IN NEUROSCIENCE, vol. 11, 7 December 2017 (2017-12-07), CH, XP055570440, ISSN: 1662-4548, DOI: 10.3389/fnins.2017.00682**
• **QIANG YU ET AL: "Constructing Accurate and Efficient Deep Spiking Neural Networks with Double-threshold and Augmented Schemes", ARXIV.ORG, CORNELL UNIVERSITY LIBRARY, 201 OLIN LIBRARY CORNELL UNIVERSITY ITHACA, NY 14853, 5 May 2020 (2020-05-05), XP081670022**
• **SIJIA LU ET AL: "Linear Leaky-Integrate-and-Fire Neuron Model Based Spiking Neural Networks and Its Mapping Relationship to Deep Neural Networks", ARXIV.ORG, CORNELL UNIVERSITY LIBRARY, 201 OLIN LIBRARY CORNELL UNIVERSITY ITHACA, NY 14853, 31 May 2022 (2022-05-31), XP091266824**

## Description

### Technical field

The present invention relates to an integrate-and-fire neuron circuit comprising at least one input to receive input signals and at least a positive and a negative output to deliver positive and negative spike output signals, a weighting subcircuit configured to generate and output positive and/or negative charge packets to a common line based on the input signals and an arrangement of a capacitor or integrator and two comparators generating the positive spike output signals at the positive output and the negative spike output signals at the negative output.

Such circuits for roughly imitating the function of a neuron are used in artificial neuronal networks (ANN), especially artificial spiking neuronal networks (SNN). Neuronal dynamics can be seen as a summation process combined with a mechanism that triggers action potentials above some critical voltage. One known representation of a neuron circuit is the integrate-and-fire neuron circuit. Information is contained in the presence or absence of a spike which is generated with such a neuron circuit.

### Prior art

R. Serrano-Gotarredona et al., "A Neuromorphic Cortical-Layer Microchip for Spike-Based Event Processing Vision Systems," in IEEE Transactions on Circuits and Systems I: Regular Papers, vol. 53, no. 12, pp. 2548-2566, Dec. 2006, propose integrate-and-fire neuron circuits for signed and unsigned processing. These circuits comprise subcircuits for generating positive and/or negative charge packets and output these charge packets to a common line based on input signals. The charges of the positive and negative charge packets are stored in a capacitor converting the sum of charges into a voltage. The voltage is compared with a reference voltage by a comparator which generates a positive and/or negative spike output signal if the voltage is larger or lower than the corresponding reference voltage. The circuit performs a reset that clears all charge on the capacitor when an output spike is created. While this reset is performed, continuing inputs can be lost (blind period). Since the reset removes all information on previous operation there is also no quantization error stored. Averaging over multiple operations of the same kind would not reveal more resolution and accuracy in averaged results. Here the amount, how much the voltage exceeds the reference voltage can be considered as the quantization error. The overall gain of such a neuron circuit depends on the absolute values of the capacitor, the input current and the reference voltage. Therefore, the result will vary heavily with temperature, process and supply variations, also known as PVT-variations (PVT: process-voltage-temperature).

EP 2877958 B1 describes a spike domain asynchronous neuron circuit with feedback. The feedback is realized as proportional feedback, continuously in value and time, and influences the adjustable gain subcircuits of this neuron circuit.

Bodo Rueckauer et al.: "Conversion of Continuous-Valued Deep Networks to Efficient Event-Driven Networks for Image Classification", Frontiers in Neuroscience, Vol. 11, 7 December 2017, deal with the conversion of Convolutional Neuronal Networks in Spiking Neuronal Networks and describe a theoretical approach for updating the capacitance stored voltage based on the spike output by considering a linear reset.

It is an object of the present invention to provide an integrate-and-fire neuron circuit which provides higher accuracy and less variation in case of temperature, process and supply variations (PVT-variations).

### Summary of the invention

The object is achieved with the integrate-and-fire neuron circuit according to claim 1. Advantageous embodiments of the circuit are subject of the dependent claims or may be deduced from the subsequent description and exemplary embodiment.

The proposed circuit comprises at least one input to receive input signals and at least a positive and a negative output to deliver positive and negative spike output signals. The input signals maybe spiking signals but may also be pulse width-modulated (pwm) or static signals. The circuit further comprises a weighting subcircuit configured to generate and output positive and/or negative charge packets to a common line of the neuron circuit based on the input signals and stored weights. A capacitance between the common line and a reference potential stores the charges from the positive and negative charge packets and converts the sum of the charges into a voltage. This capacitance can be formed of a capacitator connected between the common line and a reference potential but can also be an intrinsic (or parasitic) capacitance between the common line and at least one supply voltage or ground potential (as a reference potential) caused by the elements and wiring of the circuit. Instead of the capacitance an integrator can also be used to sum up the charges of the positive and negative charge packets and to convert the sum of the charges into a voltage. A first comparator compares this voltage against an upper reference voltage for quantization and is configured to generate the positive spike output signals at the positive output, while said voltage is larger than the upper reference voltage. A second comparator compares said voltage against a lower reference voltage for quantization and is configured to generate the negative spike output signals at the negative output, while said voltage is smaller than the lower reference voltage. The above components enable the circuit to realize signed processing, i.e., processing with positive and with negative weights as known in the art, for example from the above publication of R. Serrano-Gotarredona et al. The proposed neuron circuit is characterized by a feedback subcircuit connected to the positive and negative outputs. This feedback subcircuit is configured to generate and output positive charge packets to the common line based on each negative spike output signal (and stored weights) and to generate and output negative charge packets to the common line based on each positive spike output signal (and stored weights). In the proposed neuron circuit thus, the feedback based on the generated spike output signals is not used to reset the capacitance, but to feedback charge packets of opposite sign. The feedback subcircuit is build in the same way as the input weighting subcircuit. Due to this feedback subcircuit the input is taking information all the time and does not have any blind period. Furthermore, since there is no complete reset of the capacitance after each spike output, an accumulation of the quantization error (difference between upper/lower reference voltage and summed up voltage) and also a more exact compensation of the output is achieved. This and the integration on the next stage, the following integrate-and-fire neuron circuit, will reduce noise an improve accuracy, because averaging then becomes more meaningful. It is possible to wait longer for more accuracy in the calculated results because then the quantization errors of the previous operations will add up or compensate during the longer period. As will be shown later in connection with the exemplary embodiment, the voltage gain between two of these neuron circuits does only depend on the weight ratio and the capacitor ratio and not from the absolute current value and absolute pulse width. Therefore, using structural matching the proposed neuron circuit provides higher accuracy and less variation of the behavior over PVT variations. Structural matching means that functional blocks or functional units which are intended to do the same are all implemented in the same structural and physical way from the same subblocks, parts and/or elements. Functional blocks or functional units that need to do the opposite (e.g. compensate a positive current by a negative current) are implemented in a complementary structure from complementary elements (e.g. NMOS instead of PMOS transistors in a mirrored arrangement). Namely - in the configurations of the circuit described later - all P-AWE are built as multiple instantiations of one block, as well as all N-AWE are built from multiple instantiations of a second block and also their subparts, which are mainly the current sources and switches inside, where N-AWE contains complementary elements that are arranged in a complementary structure to P_AWE. This implies that all the functional blocks or units will vary in the same manner with PVT and therefore the influence of this variation cancels out in overall behaviour. With the present invention a digitally configurable (leaky) integrate-and-fire neuron is proposed which can be used for mixed-signal spiking neuronal networks.

The proposed feedback enables the usage of local clocking created by small circuits. The highly variable pulse width and period from such a small circuit does not influence multistage accuracy because there is only one clock source for the consideration of the same charge packet in the sending and receiving circuit. The information in pulse width compensates for the non-ideal circuitry. The proposed feedback also gives the opportunity to calculate the result in a short period of time roughly or to count output spikes over multiple periods of time with the same input spike density and yield a higher accuracy for the same operation, because the rest of previous calculations is not removed and therefore adds up over time. The special implementation relies on structural matching of the parts and makes the circuit accuracy less dependent of variations of bias current and capacitance caused by production or environmental influences.

In the following, embodiments of the proposed neuron circuit are described. These embodiments may also be combined. In a first embodiment, the weighting subcircuit comprises at least one, preferably a multiplicity of first positive analog weight emulators (P-AWE) each configured to generate and output a positive charge packet to the common line when enabled by a first enabling signal in combination with an additional enabling signal. The additional enabling signal is provided based on the desired weight. The subcircuit also comprises at least one, preferably a multiplicity of first negative analog weight emulators (N-AWE) each configured to generate and output a negative charge packet to the common line when enabled by a first enabling signal in combination with an additional enabling signal (depending on the desired weight). An input signal interface of the weighting subcircuit receives the input signals and generates the first enabling signals, based on the input signals, for the first positive and negative analog weight emulators.

Also the feedback subcircuit comprises at least one, preferably a multiplicity of (second) positive analog weight emulators each configured to generate and output a positive charge packet to the common line when enabled by a second enabling signal in combination with an additional enabling signal, at least one, preferably a multiplicity of (second) negative analog weight emulators each configured to generate and output a negative charge packet to the common line when enabled by a second enabling signal in combination with an additional enabling signal. A feedback signal interface of the feedback subcircuit is connected to the positive and negative outputs of the neuron circuit and configured to generate the second enabling signals for the second positive analog weight emulators based on each negative spike output signal, and to generate the second enabling signals for the second negative analog weight emulators based on each positive spike output signal. The first and/or second positive and negative analog weight emulators of one or both above embodiments each have a memory or are connected to a memory storing the weights based on which the additional enabling signals are provided.

Preferably the first and/or second positive and negative analog weight emulators of the above embodiments each comprise a switched current source for generating the charge packets. The neuron circuit may also comprise a common bias circuit to bias these switched current sources of at least one of the first and second positive and negative analog weight emulators.

In a further embodiment, the neuron circuit comprises a reference voltage generator to generate the reference potential, the upper reference voltage and the lower reference voltage, preferably using positive and negative analog weight emulators and capacitors.

In a further embodiment, the proposed neuron circuit comprises an offset subcircuit for generating an offset to the created charge packages. This offset subcircuit includes at least one, preferably a multiplicity of third positive analog weight emulators each configured to generate and output a positive charge packet to the common line when enabled by a third enabling signal in combination with an additional enabling signal, and at least one, preferably a multiplicity of third negative analog weight emulators each configured to generate and output a negative charge packet to the common line when enabled by a third enabling signal in combination with an additional enabling signal. The third enabling signals are generated by a digital spike generator which is connected to the third positive and negative analog weight emulators. This spike generator generates digital spike signals based on a received digital offset value, wherein the digital spike signals represent the third enabling signals for the third positive and negative analog weight emulators.

The proposed neuron circuit can be advantageously used in spiking neuronal networks or in interfaces between non-spiking and spiking neuron networks.

## Short description of the drawings

The proposed neuron circuit is described in the following by way of example in connection with the corresponding figures. The figures show:

Fig. 1     an exemplary embodiment of the proposed neuron circuit;

Fig. 2     an example of cascading two neuron circuits of the prior art; and

Fig. 3     an example of cascading two neuron circuits according to the present invention.

## Detailed description of embodiments

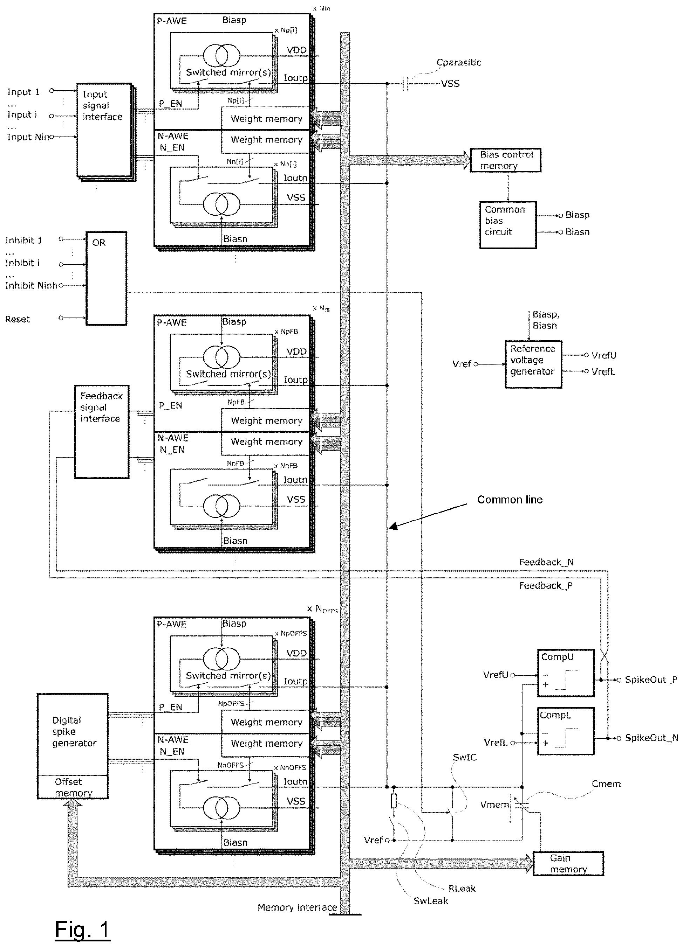

An exemplary embodiment of the proposed neuron circuit including several optional components is schematically depicted in figure 1. This figure shows on the left side the weighting subcircuit, the feedback subcircuit and the offset subcircuit. On the right hand side, the optional common bias circuit and the optional reference voltage generator are indicated as well as the comparators and the capacitor (Cmem). The different memories indicated in figure 1 are connected to a memory interface as indicated by the broad line with arrows.

The input signals are received at the corresponding inputs Input i (i = 1 ... N) of an input signal interface. Each of it is enabling at least one of a multiplicity of positive analog weight emulators (P-AWE) and of a multiplicity of negative analog weight emulators (N-AWE) via the interface which receives the input signals and generates the enabling signals (P_EN, N_EN). The positive analog weight emulators (P-AWE) generate positive charge packets (add charge) from input spikes (input signals) and have a weight memory to hold additional enabling data influencing the number of activating currents depending on the stored weights. The negative analog weight emulators (N-AWE) to generate negative charge packets (remove charge) from input spikes and comprise also a weight memory to hold additional enabling data influencing the number of activating currents depending on the stored weights. The currents or charge packages are generated by switched current sources in the emulators of this weighting subcircuit and fed to a common line of the neuron circuit as depicted in figure 1.

A capacitor Cmem in parallel to a parasitic capacitance Cparasitic and connected to the common line stores the charges created by the P-AWE and N-AWE and converts the sum of charges into a voltage Vmem. The capacitor Cmem might be modified in size by a digital value, stored in a memory (gain memory). Instead of the capacitor, the capacitance Cparasitic can also be used to store and convert the charges into the voltage Vmem. Alternatively, the capacitor Cmem of figure 1 can be replaced by an integrator made from an OpAmp and another capacitor to integrate the charges and generate the voltage Vmem. The circuit further comprises a first comparator (CompU) to compare Vmem against an upper reference voltage VRefU and to generate spikes SpikeOUT_P on the positive output, while Vmem is larger than VRefU, and a second comparator (CompL) to compare Vmem against a lower reference voltage VRefL and to generate spikes SpikeOUT_N on the negative output, while Vmem is smaller than VRefL.

A positive feedback signal (Feedback_P) is derived from SpikeOUT_N in a feedback signal interface of the feedback subcircuit, which enables another multiplicity of positive analog weight emulators (P-AWE). A negative feedback signal (Feedback_N) is derived from SpikeOUT_P in the feedback signal interface, which enables another multiplicity of negative analog weight emulators (N-AWE). As in the case of the above weighting subcircuit the emulators comprise means to store the weights in or near the analog weight emulators (Weight memory) that might be SRAM cells or NVM cells.

The neuron circuit of figure 1 also comprises an offset subcircuit having a digital spike generator to generate spikes from a digital offset input (offset memory). The digital spike generator is wired to at least one positive analog weight emulator (P-AWE) having the same or different multiplicity as for the input spikes and at least one negative analog weight emulator (N-AWE) having same or different multiplicity as for the input spikes. These analog weight emulators generate positive and negative charge packets fed to the common line to be treated as additional input spiking signals.

Further (optional) components of the neuron circuit of figure 1 are a common bias circuit, a reference voltage generator, an additional switch SwIC and a combination of a resistor Rleak and a switch SwLeak. The common bias circuit generates and feeds a bias (Biasp, Biasn) to the switched current sources of the N-AWEs and P-AWEs. The reference voltage generator generates the upper and lower reference voltages VRefU and VRefL versus Vref. These reference voltages may be created from currents using N-AWE and P-AWE circuits and capacitors, for making the comparator limits dependent on the absolute value of the bias current and therefore making the overall gain independent of the absolute value of the bias current. The switch SwIC is used to set an initial condition on the capacitor Cmem when a Reset input is active or one of at least one optional Inhibit inputs is activated. The resistor Rleak and the switch SwLeak are implemented to create a defined leaky integrator behavior, where the resistor can also be implemented as a switched capacitor.

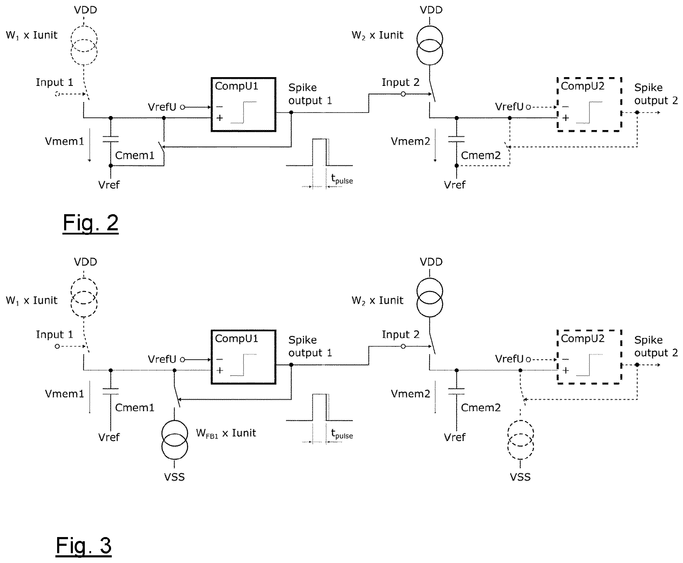

The most important advantage of the proposed neuron circuit arises when cascading the neurons (neuron circuits). Figures 2 and 3 show a comparison between the prior art (figure 2) and the proposed invention (figure 3) where inactive parts are omitted and parts that precede or follow the focused parts are shown using dashed lines. Both examples show a series of two neuron circuits, with the capacitors Cmeml and Cmem2 and the corresponding current sources and comparators. In both figures the fire feedback of the first stage and the pulse reception in the second stage can be recognized. In the system of figure 2 according to the prior art, when the first neuron fires a pulse, the charge removed from the first capacitor Cmeml in the first stage is at least

$$Qremove1 = (VrefU-Vref) * Cmem1$$

while in the second stage the charge added to the second stage's capacitor Cmem2 is

$$Qadd2 = W2 * Iunit * tpulse * Cmem2$$

The ratio of Qadd2/Qremove1, which is the voltage gain from Vmem1 to Vmem2 of the circuit, is depending on the ratio of absolute weight value W2, absolute current value Iunit and absolute pulse width tpulse over absolute voltage times a capacitance ratio.

On the other hand, in the system according to the present invention according to figure 3, when the first neuron fires a pulse, the charge removed from the first capacitor Cmeml in the first stage is exactly and not more than

$$Qremove1 = W1 * Iunit * tpulse * Cmem1$$

while in the second stage the charge added to the second stage's capacitor Cmem2 is still

$$Qadd2 = W2 * Iunit * tpulse * Cmem2$$

Therefore, the gain Qadd2/Qremove1 depends on a weight ratio W2/W1 and a capacitor ratio Cmem2/Cmem1 which are quite exact (e.g. 0.1%), when realized with the same unit circuits, although the absolute value of each capacitor varies in a larger range (e.g. 20%). Iunit and tpulse cancel out. This results in a very high accuracy and less dependency on variations of the bias current and capacitance.

## Claims

1. Integrate-and-fire neuron circuit, at least comprising:

   - at least one input to receive input signals and at least a positive and a negative output to deliver positive and negative spike output signals,
   - a weighting subcircuit configured to generate and output positive and/or negative charge packets to a common line based on the input signals and stored weights,

- a capacitance (Cmem) between the common line and a reference potential (Vref) or an integrator, said capacitance (Cmem) or integrator storing the charges of the positive and negative charge packets and converting the sum of charges into a voltage (Vmem),
- a first comparator (CompU) comparing said voltage (Vmem) against an upper reference voltage (VRefU) and configured to generate the positive spike output signals at the positive output, while said voltage (Vmem) is larger than the upper reference voltage (VRefU),
- a second comparator (CompL) comparing said voltage (Vmem) against a lower reference voltage (VRefL) and configured to generate the negative spike output signals at the negative output, while said voltage (Vmem) is smaller than the lower reference voltage (VRefL), and
- a feedback subcircuit connected to the positive and negative outputs and configured to generate and output positive charge packets to the common line based on each negative spike output signal and stored weights and to generate and output negative charge packets to the common line based on each positive spike output signal and stored weights,

wherein the weighting subcircuit comprises

- at least one or a multiplicity of first positive analog weight emulators (P-AWE), which generate positive charge packets from input signals and have a weight memory to hold additional enabling data influencing the number of activating currents depending on the stored weights, each of said analog weight emulators configured to generate and output a positive charge packet to the common line when enabled by a first enabling signal in combination with an additional enabling signal, which is based on a stored weight,
- at least one or a multiplicity of first negative analog weight emulators (N-AWE), which generate negative charge packets from input signals and have a weight memory to hold additional enabling data influencing the number of activating currents depending on the stored weights, each of said analog weight emulators configured to generate and output a negative charge packet to the common line when enabled by a first enabling signal in combination with an additional enabling signal, and
- an input signal interface which receives the input signals and generates the first enabling signals, based on the input signals, for the first positive and negative analog weight emulators (P-AWE, N-AWE),

wherein the feedback subcircuit comprises

- at least one or a multiplicity of second positive analog weight emulators (P-AWE), which generate positive charge packets from input signals and have a weight memory to hold additional enabling data influencing the number of activating currents depending on the stored weights, each of said analog weight emulators configured to generate and output a positive charge packet to the common line when enabled by a second enabling signal in combination with an additional enabling signal, which is based on a stored weight,
- at least one or a multiplicity of second negative analog weight emulators (N-AWE), which generate negative charge packets from input signals and have a weight memory to hold additional enabling data influencing the number of activating currents depending on the stored weights, each of said analog weight emulators configured to generate and output a negative charge packet to the common line when enabled by a second enabling signal in combination with an additional enabling signal, and
- a feedback signal interface connected to the positive and negative outputs and configured to generate the second enabling signals for the second positive analog weight emulators (P-AWE) based on each negative spike output signal, and to generate the second enabling signals for the second negative analog weight emulators (N-AWE) based on each positive spike output signal and wherein

the first and second positive analog weight emulators are formed identically, the first and second negative analog weight emulators are formed identically and the positive and negative analog weight emulators are formed in complementary manner to achieve structural matching, in which functional blocks or functional units which are intended to do the same are all implemented in the same structural and physical way from the same subblocks, parts and/or elements, and in which functional blocks or functional units that need to do the opposite are implemented in a complementary structure from complementary elements.

2. Integrate-and-fire neuron circuit according to claim 1,
   **characterized in that**
   the first and/or second positive and negative analog weight emulators (P-AWE, N-AWE) each having a memory or being connected to a memory storing weights and/or holding additional enabling data influencing the number of activating currents depending on the stored weights.

3. Integrate-and-fire neuron circuit according to claim 1 or 2,
   **characterized in that**
   the first and/or second positive and negative analog weight emulators (P-AWE, N-AWE) each comprise a switched current source for generating the charge packets.

4. Integrate-and-fire neuron circuit according to claim 3,
   **characterized in that**
   the circuit comprises a common bias circuit to bias the switched current sources of at least one of the first and second positive and negative analog weight emulators (P-AWE, N-AWE).

5. Integrate-and-fire neuron circuit according to one or several of claims 1 to 4,
   **characterized in that**
   the circuit comprises a reference voltage generator to generate the reference potential (Vref), the upper reference voltage (VRefU) and the lower reference voltage (VRefL) using positive and negative analog weight emulators and capacitors.

6. Integrate-and-fire neuron circuit according to one or several of claims 1 to 5,
   **characterized in that**
   the circuit includes an offset subcircuit comprising

   - at least one or a multiplicity of third positive analog weight emulators (P-AWE), which generate positive charge packets from input signals and have a weight memory to hold additional enabling data influencing the number of activating currents depending on the stored weights, each of said analog weight emulators configured to generate and output a positive charge packet to the common line when enabled by a third enabling signal in combination with an additional enabling signal,
   - at least one or a multiplicity of third negative analog weight emulators (N-AWE), which generate negative charge packets from input signals and have a weight memory to hold additional enabling data influencing the number of activating currents depending on the stored weights, each of said analog weight emulators configured to generate and output a negative charge packet to the common line when enabled by a third enabling signal in combination with an additional enabling signal, and
   - a digital spike generator connected to the third positive and negative analog weight emulators (P-AWE, N-AWE) and generating digital spike signals based on a received digital offset value, said digital spike signals representing the third enabling signals for the third positive and negative analog weight emulators (P-AWE, N-AWE).

7. Integrate-and-fire neuron circuit according to one or several of claims 1 to 6,
   **characterized in that**
   the capacitance (Cmem) is formed of a capacitor connected between the common line and the reference potential (Vref) or at least one supply line.

8. Integrate-and-fire neuron circuit according to claim 7,
   **characterized in that**
   said capacitor is configured to be modified in size by a digital value stored in an additional memory.

9. Integrate-and-fire neuron circuit according to one or several of claims 1 to 8,
   **characterized in that** a resistor can be switched in parallel to the capacitance (Cmem) to implement a controlled leaky behavior.

10. Integrate-and-fire neuron circuit according to claim 9,
    **characterized in that**
    said resistor is implemented using switched capacitors.

11. Integrate-and-fire neuron circuit according to one or several of claims 1 to 10,
    **characterized in that** a switch is arranged between the common line and the reference potential (Vref) allowing to set the common line to the reference potential (Vref) when activated by at least one inhibitory input or a reset input.

**Patentansprüche**

1. Integrate-and-Fire-Neuronenschaltung, die mindestens umfasst:

 - mindestens einen Eingang, um Eingangssignale zu empfangen, und mindestens einen positiven und einen negativen Ausgang, um positive und negative Spike-Ausgangssignale zu liefern,
 - eine Gewichtungsteilschaltung, die ausgelegt ist, um auf der Grundlage der Eingangssignale und gespeicherter Gewichtungen positive und/oder negative Ladungspakete zu generieren und an eine gemeinsame Leitung auszugeben,
 - eine Kapazität (Cmem) zwischen der gemeinsamen Leitung und einem Referenzpotential (Vref) oder einen Integrator, wobei die Kapazität (Cmem) oder der Integrator die Ladungen der positiven und der negativen Ladungspakete speichert und die Summe von Ladungen in eine Spannung (Vmem) umwandelt,
 - einen ersten Komparator (CompU), der die Spannung (Vmem) mit einer oberen Referenzspannung (VRefU) vergleicht und ausgelegt ist, um die positiven Spike-Ausgangssignale am positiven Ausgang zu generieren, während die Spannung (Vmem) größer als die obere Referenzspannung (VRefU) ist,
 - einen zweiten Komparator (CompL), der die Spannung (Vmem) mit einer unteren Referenzspannung (VRefL) vergleicht und ausgelegt ist, um die negativen Spike-Ausgangssignale am negativen Ausgang zu generieren, während die Spannung (Vmem) kleiner als die untere Referenzspannung (VRefL) ist, und
 - eine Rückkopplungsteilschaltung, die mit dem positiven und dem negativen Ausgang verbunden ist und derart ausgelegt ist, dass sie auf der Grundlage jedes negativen Spike-Ausgangssignals und gespeicherter Gewichtungen positive Ladungspakete generiert und an die gemeinsame Leitung ausgibt und dass sie auf der Grundlage jedes positiven Spike-Ausgangssignals und gespeicherter Gewichtungen negative Ladungspakete generiert und an die gemeinsame Leitung ausgibt,

 wobei die Gewichtungsteilschaltung umfasst:

 - mindestens einen oder mehrere erste positive analoge Gewichtungsemulatoren (P-AWE), die positive Ladungspakete aus Eingangssignalen generieren und einen Gewichtungsspeicher aufweisen, um zusätzliche Aktivierungsdaten zu halten, die die Anzahl von Aktivierungsströmen in Abhängigkeit von den gespeicherten Gewichtungen beeinflussen, wobei jeder der analogen Gewichtungsemulatoren derart ausgelegt ist, dass er ein positives Ladungspaket generiert und an die gemeinsame Leitung ausgibt, wenn er durch ein erstes Aktivierungssignal in Kombination mit einem zusätzlichen Aktivierungssignal, das auf einer gespeicherten Gewichtung basiert, aktiviert wird,
 - mindestens einen oder mehrere erste negative analoge Gewichtungsemulatoren (N-AWE), die negative Ladungspakete aus Eingangssignalen generieren und einen Gewichtungsspeicher aufweisen, um zusätzliche Aktivierungsdaten zu halten, die die Anzahl von Aktivierungsströmen in Abhängigkeit von den gespeicherten Gewichtungen beeinflussen, wobei jeder der analogen Gewichtungsemulatoren derart ausgelegt ist, dass er ein negatives Ladungspaket generiert und an die gemeinsame Leitung ausgibt, wenn er durch ein erstes Aktivierungssignal in Kombination mit einem zusätzlichen Aktivierungssignal aktiviert wird, und
 - eine Eingangssignalschnittstelle, die die Eingangssignale empfängt und auf der Grundlage der Eingangssignale die ersten Aktivierungssignale für die positiven und negativen analogen Gewichtungsemulatoren (P-AWE, N-AWE) generiert,

 wobei die Rückkopplungsteilschaltung umfasst:

 - mindestens einen oder mehrere zweite positive analoge Gewichtungsemulatoren (P-AWE), die positive Ladungspakete aus Eingangssignalen generieren und einen Gewichtungsspeicher aufweisen, um zusätzliche Aktivierungsdaten zu halten, die die Anzahl von Aktivierungsströmen in Abhängigkeit von den gespeicherten Gewichtungen beeinflussen, wobei jeder der analogen Gewichtungsemulatoren derart ausgelegt ist, dass er ein positives Ladungspaket generiert und an die gemeinsame Leitung ausgibt, wenn er durch ein zweites Aktivierungssignal in Kombination mit einem zusätzlichen Aktivierungssignal, das auf einer gespeicherten Gewichtung basiert, aktiviert wird,
 - mindestens einen oder mehrere zweite negative analoge Gewichtungsemulatoren (N-AWE), die negative Ladungspakete aus Eingangssignalen generieren und einen Gewichtungsspeicher aufweisen, um zusätzliche Aktivierungsdaten zu halten, die die Anzahl von Aktivierungsströmen in Abhängigkeit von den gespeicherten Gewichtungen beeinflussen, wobei jeder der analogen Gewichtungsemulatoren derart ausgelegt ist, dass er ein negatives Ladungspaket generiert und an die gemeinsame Leitung ausgibt, wenn er durch ein zweites Aktivierungssignal in Kombination mit einem zusätzlichen Aktivierungssignal aktiviert wird, und

- eine Rückkopplungssignalschnittstelle, die mit dem positiven und dem negativen Ausgang verbunden ist und derart ausgelegt ist, dass sie auf der Grundlage jedes negativen Spike-Ausgangssignals die zweiten Aktivierungssignale für die zweiten positiven analogen Gewichtungsemulatoren (P-AWE) generiert, und auf der Grundlage jedes positiven Spike-Ausgangssignals die zweiten Aktivierungssignale für die zweiten negativen analogen Gewichtungsemulatoren (N-AWE) generiert, und wobei

die ersten und die zweiten positiven analogen Gewichtungsemulatoren identisch ausgebildet sind, die ersten und die zweiten negativen analogen Gewichtungsemulatoren identisch ausgebildet sind und die positiven und die negativen analogen Gewichtungsemulatoren auf komplementäre Weise ausgebildet sind, um eine strukturelle Übereinstimmung zu erreichen, wobei Funktionsblöcke oder Funktionseinheiten, die das Gleiche verrichten sollen, alle auf die gleiche strukturelle und physische Weise aus den gleichen Unterblöcken, Teilen und/oder Elementen implementiert sind, und wobei Funktionsblöcke oder Funktionseinheiten, die das Gegenteil verrichten sollen, in einer komplementären Struktur aus komplementären Elementen implementiert sind.

2. Integrate-and-Fire-Neuronenschaltung nach Anspruch 1, **dadurch gekennzeichnet, dass** die ersten und/oder die zweiten positiven und negativen analogen Gewichtungsemulatoren (P-AWE, N-AWE) jeweils einen Speicher aufweisen oder mit einem Speicher verbunden sind, der Gewichtungen speichert und/oder zusätzliche Aktivierungsdaten hält, die die Anzahl von Aktivierungsströmen in Abhängigkeit von den gespeicherten Gewichtungen beeinflussen.

3. Integrate-and-Fire-Neuronenschaltung nach Anspruch 1 oder 2, **dadurch gekennzeichnet, dass** die ersten und/oder die zweiten positiven und negativen analogen Gewichtungsemulatoren (P-AWE, N-AWE) jeweils eine geschaltete Stromquelle zum Generieren der Ladungspakete umfassen.

4. Integrate-and-Fire-Neuronenschaltung nach Anspruch 3, **dadurch gekennzeichnet, dass** die Schaltung eine gemeinsame Vorspannungsschaltung umfasst, um die geschalteten Stromquellen mindestens eines der ersten und der zweiten positiven und negativen analogen Gewichtungsemulatoren (P-AWE, N-AWE) vorzuspannen.

5. Integrate-and-Fire-Neuronenschaltung nach einem oder mehreren der Ansprüche 1 bis 4, **dadurch gekennzeichnet, dass** die Schaltung einen Referenzspannungsgenerator umfasst, um das Referenzpotential (Vref), die obere Referenzspannung (VRefU) und die untere Referenzspannung (VRefL) unter Verwendung positiver und negativer analoger Gewichtungsemulatoren und Kondensatoren zu generieren.

6. Integrate-and-Fire-Neuronenschaltung nach einem oder mehreren der Ansprüche 1 bis 5, **dadurch gekennzeichnet, dass** die Schaltung eine Offset-Teilschaltung aufweist, umfassend:

- mindestens einen oder mehrere dritte positive analoge Gewichtungsemulatoren (P-AWE), die positive Ladungspakete aus Eingangssignalen generieren und einen Gewichtungsspeicher aufweisen, um zusätzliche Aktivierungsdaten zu halten, die die Anzahl von Aktivierungsströmen in Abhängigkeit von den gespeicherten Gewichtungen beeinflussen, wobei jeder der analogen Gewichtungsemulatoren derart ausgelegt ist, dass er ein positives Ladungspaket generiert und an die gemeinsame Leitung ausgibt, wenn er durch ein drittes Aktivierungssignal in Kombination mit einem zusätzlichen Aktivierungssignal aktiviert wird,
- mindestens einen oder mehrere dritte negative analoge Gewichtungsemulatoren (N-AWE), die negative Ladungspakete aus Eingangssignalen generieren und einen Gewichtungsspeicher aufweisen, um zusätzliche Aktivierungsdaten zu halten, die die Anzahl von Aktivierungsströmen in Abhängigkeit von den gespeicherten Gewichtungen beeinflussen, wobei jeder der analogen Gewichtungsemulatoren derart ausgelegt ist, dass er ein negatives Ladungspaket generiert und an die gemeinsame Leitung ausgibt, wenn er durch ein drittes Aktivierungssignal in Kombination mit einem zusätzlichen Aktivierungssignal aktiviert wird, und
- einen digitalen Spike-Generator, der mit den dritten positiven und negativen analogen Gewichtungsemulatoren (P-AWE, N-AWE) verbunden ist und digitale Spike-Signale auf der Grundlage eines empfangenen digitalen Offset-Wertes generiert, wobei die digitalen Spike-Signale die dritten Aktivierungssignale für die dritten positiven und negativen analogen Gewichtungsemulatoren (P-AWE, N-AWE) repräsentieren.

7. Integrate-and-Fire-Neuronenschaltung nach einem oder mehreren der Ansprüche 1 bis 6,

**dadurch gekennzeichnet, dass**
die Kapazität (Cmem) aus einem Kondensator gebildet ist, der zwischen der gemeinsamen Leitung und dem Referenzpotential (Vref) oder mindestens einer Versorgungsleitung verbunden ist.

8. Integrate-and-Fire-Neuronenschaltung nach Anspruch 7, **dadurch gekennzeichnet, dass**
der Kondensator derart ausgelegt ist, dass seine Größe durch einen in einem zusätzlichen Speicher gespeicherten digitalen Wert modifiziert werden kann.

9. Integrate-and-Fire-Neuronenschaltung nach einem oder mehreren der Ansprüche 1 bis 8,
**dadurch gekennzeichnet, dass** ein Widerstand parallel zur Kapazität (Cmem) geschaltet werden kann, um ein gesteuertes Leckstromverhalten zu implementieren.

10. Integrate-and-Fire-Neuronenschaltung nach Anspruch 9, **dadurch gekennzeichnet, dass**
der Widerstand unter Verwendung geschalteter Kondensatoren implementiert ist.

11. Integrate-and-Fire-Neuronenschaltung nach einem oder mehreren der Ansprüche 1 bis 10,
**dadurch gekennzeichnet, dass** ein Schalter zwischen der gemeinsamen Leitung und dem Referenzpotential (Vref) angeordnet ist, wodurch ermöglicht wird, dass bei einer Aktivierung durch mindestens einen inhibitorischen Eingang oder einen Rücksetzeingang die gemeinsame Leitung auf das Referenzpotential (Vref) gesetzt wird.

**Revendications**

1. Circuit de neurones Integrate-and-fire, comprenant au moins :

- au moins une entrée pour recevoir les signaux d'entrée et au moins une sortie positive et une sortie négative pour délivrer des signaux de sortie de pointe positif et négatif,
- un sous-circuit de pondération configuré pour générer et émettre des paquets de charges positives et/ou négatives à une ligne commune sur la base des signaux d'entrée et des pondérations stockées,
- une capacitance (Cmem) entre la ligne commune et un potentiel de référence (Vref) ou un intégrateur, ladite capacitance (Cmem) ou ledit intégrateur stockant les charges des paquets de charges positives et négatives et convertissant la somme des charges en une tension (Vmem),
- un premier comparateur (CompU) comparant ladite tension (Vmem) avec une tension de référence supérieure et configuré pour générer les signaux de sortie de pointe positive sur la sortie positive, lorsque ladite tension (Vmem) est supérieure à la tension de référence supérieure (VRefU),
- un deuxième comparateur (CompL) comparant ladite tension (Vmem) avec une tension de référence inférieure (VRefL) et configuré pour générer les signaux de sortie de pointe négative sur la sortie négative, lorsque ladite tension (Vmem) est inférieure à la tension de référence inférieure (VRefL), et
- un sous-circuit de rétroaction connecté aux sorties positives et négatives et configuré pour générer et émettre des paquets de charge positive sur la ligne commune sur la base de chaque signal de sortie de pointe négative et des pondérations stockées, et pour générer et émettre des paquets de charge négative sur la ligne commune sur la base de chaque signal de sortie de pointe positive et des pondérations stockées,

dans lequel le sous-circuit de pondération comprend

- au moins un ou une multiplicité de premiers émulateurs de pondération analogiques positifs (P-AWE), qui génèrent des paquets de charge positive à partir des signaux d'entrée et disposent d'une mémoire de pondération pour conserver des données d'activation supplémentaires influençant le nombre de courants d'activation en fonction des pondérations stockées, chacun desdits émulateurs de pondération analogiques étant configuré pour générer et émettre un paquet de charge positive sur la ligne commune lorsqu'il est activé par un premier signal d'activation en combinaison avec un signal d'activation supplémentaire, qui est basé sur une pondération stockée,
- au moins un ou une multiplicité de premiers émulateurs de pondération analogiques négatifs (N-AWE), qui génèrent des paquets de charge négative à partir de signaux d'entrée et disposent d'une mémoire de pondération pour conserver des données d'activation supplémentaires influençant le nombre de courants d'activation en fonction des pondérations stockées, chacun desdits émulateurs de pondération analogiques étant configuré pour générer et émettre un paquet de charge négative sur la ligne commune lorsqu'il est activé par un premier signal d'activation en combinaison avec un signal d'activation supplémentaire et

- une interface de signal d'entrée qui reçoit les signaux d'entrée et génère les premiers signaux d'activation, sur la base des signaux d'entrée, pour les premiers émulateurs de pondération analogiques positifs et négatifs (P-AWE, N-AWE),

dans lesquels le sous-circuit de rétroaction comprend

- au moins un ou une multiplicité de deuxièmes émulateurs de pondération analogiques positifs (P-AWE), qui génèrent des paquets de charge positive à partir de signaux d'entrée et disposent d'une mémoire de pondération pour conserver des données d'activation supplémentaires influençant le nombre de courants d'activation en fonction des pondérations stockées, chacun desdits émulateurs de pondération analogiques étant configuré pour générer et émettre un paquet de charge positive sur le ligne commune activée par un deuxième signal d'activation en combinaison avec un signal d'activation supplémentaire, qui est basé sur une pondération stockée ;
- au moins un ou une multiplicité de deuxièmes émulateurs de pondération analogiques négatifs (N-AWE) qui génèrent des paquets de charge négative à partir de signaux d'entrée et disposent d'une mémoire de pondération pour conserver des données d'activation supplémentaires influençant le nombre de courants d'activation en fonction des pondérations stockées, chacun desdits émulateurs de pondération analogiques étant configuré pour générer et émettre un paquet de charge négative sur la ligne commune lorsqu'il est activé par un deuxième signal d'activation en combinaison avec un signal d'activation supplémentaire et
- une interface de signal de rétroaction connectée aux sorties positive et négative et configurée pour générer les deuxièmes signaux d'activation pour les deuxièmes émulateurs de pondération analogiques positifs (P-AWE) sur la base de chaque signal de sortie de pointe négative et pour générer les deuxièmes signaux d'activation pour les deuxièmes émulateurs de pondération analogiques négatifs (N-AWE) sur la base de chaque signal de sortie de pointe positive et dans lequel

les premier et deuxième émulateurs de pondération analogiques positifs sont formés de manière identique, le premier et deuxième émulateurs de pondération analogiques négatifs sont formés de manière identique et les émulateurs de pondération analogiques positifs et négatifs sont formés de manière complémentaire pour obtenir une correspondance structurelle, dans laquelle les blocs fonctionnels ou unités fonctionnelles qui sont destinés à réaliser la même tâche sont tous implémentés de la même manière structurelle et physique à partir des mêmes sous-blocs, parties et/ou éléments et dans laquelle les blocs fonctionnels ou unités fonctionnelles qui doivent réaliser la tâche inverse sont implémentés dans une structure complémentaire à partir d'éléments complémentaires.

2. Circuit de neurones Integrate-and-fire selon la revendication 1,
**caractérisé en ce que**
les premier et/ou deuxième émulateurs de pondération analogiques positifs et négatifs (P-AWE, N-AWE) possèdent chacun une mémoire ou sont connectés à une mémoire stockant des pondération et/ou conservant des données d'activation supplémentaires influençant le nombre de courants d'activation en fonction des pondérations stockées.

3. Circuit de neurones Integrate-and-fire selon la revendication 1 ou 2,
**caractérisé en ce que**
les premier et/ou deuxième émulateurs de pondération analogiques positifs et négatifs (P-AWE, N-AWE) comprennent chacun une source de courant commutée pour générer les paquets de charge.

4. Circuit de neurones Integrate-and-fire selon la revendication 3,
**caractérisé en ce que**
le circuit comprend un circuit de polarisation commun pour polariser les sources de courant commutées d'au moins un des premier et deuxième émulateurs de pondération analogiques positifs et négatifs (P-AWE, N-AWE). 10

5. Circuit de neurones Integrate-and-fire selon une ou plusieurs des revendications 1 à 4,
**caractérisé en ce que**
le circuit comprend un générateur de tension de référence pour générer le potentiel de référence (Vref), la tension de référence supérieure (VRefU) et la tension de référence inférieure (VRefL) à l'aide d'émulateurs de pondération analogiques positifs et négatifs et de condensateurs.

6. Circuit de neurones Integrate-and-fire selon une ou plusieurs des revendications 1 à 5,
**caractérisé en ce que**
le circuit comprend un sous-circuit de décalage comprenant

- au moins un ou une multiplicité de troisièmes émulateurs de pondération analogiques positifs (P-AWE), qui génèrent des paquets de charge positive à partir de signaux d'entrée et disposent d'une mémoire de pondération pour conserver des données d'activation supplémentaires influençant le nombre de courants d'activation en fonction des pondérations stockées, chacun desdits émulateurs de pondération analogiques étant configuré pour générer et émettre un paquet de charge positive sur la ligne commune lorsqu'il est activé par un troisième signal d'activation en combinaison avec un signal d'activation supplémentaire,

- au moins un ou une multiplicité de troisièmes émulateurs de pondération analogiques négatifs (N-AWE), qui génèrent des paquets de charge négative à partir de signaux d'entrée et disposent d'une mémoire de pondération pour conserver des données d'activation supplémentaires influençant le nombre de courants d'activation en fonction des pondérations stockées, chacun desdits émulateurs de pondération analogiques étant configuré pour générer et émettre un paquet de charge négative sur la ligne commune lorsqu'il est activé par un troisième signal d'activation en combinaison avec un signal d'activation supplémentaire et

- un générateur de pointes numériques connecté aux troisièmes émulateurs de pondération analogiques positifs et négatifs (P-AWE, N-AWE) et générant des signaux de pointes numériques sur la base d'une valeur de décalage numérique reçue, lesdits signaux de pointes numériques représentant les troisièmes signaux d'activation pour le troisième émulateur de pondération analogique positif et négatif (P-AWE, N-AWE).

7. Circuit de neurones Integrate-and-fire selon une ou plusieurs des revendications 1 à 6, **caractérisé en ce que** la capacitance (Cmem) est constituée d'un condensateur connecté entre la ligne commune et le potentiel de référence (Vref) ou au moins une ligne d'alimentation.

8. Circuit de neurones Integrate-and-fire selon la revendication 7, **caractérisé en ce que** ledit condensateur est configuré pour être modifié en taille par une valeur numérique stockée dans une mémoire supplémentaire.

9. Circuit de neurones Integrate-and-fire selon une ou plusieurs des revendications 1 à 8, **caractérisé en ce qu'**une résistance peut être connectée en parallèle à la capacitance (Cmem) pour implémenter un comportement à fuite contrôlée.

10. Circuit de neurones Integrate-and-fire selon la revendication 9, **caractérisé en ce que** ladite résistance est implémentée à l'aide de condensateurs commutés.

11. Circuit de neurones Integrate-and-fire selon une ou plusieurs des revendications 1 à 10, **caractérisé en ce qu'**un commutateur est disposé entre la ligne commune et le potentiel de référence (Vref), permettant de régler la ligne commune au potentiel de référence (Vref) lors de l'activation par au moins une entrée inhibitrice ou une entrée de réinitialisation.

Fig. 1

## Fig. 2

## Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2877958 B1

**Non-patent literature cited in the description**

- **R. SERRANO-GOTARREDONA et al.** A Neuromorphic Cortical-Layer Microchip for Spike-Based Event Processing Vision Systems. *IEEE Transactions on Circuits and Systems I: Regular Papers*, December 2006, vol. 53 (12), 2548-2566

- **BODO RUECKAUER et al.** Conversion of Continuous-Valued Deep Networks to Efficient Event-Driven Networks for Image Classification. *Frontiers in Neuroscience*, 07 December 2017, vol. 11